# EUROPEAN PATENT APPLICATION

(11) **EP 0 733 836 A1**
(43) Date of publication of application: **25.09.1996**
(21) Application number: 95309275.6
(22) Date of filing: 20.12.1995
(51) Int. Cl.: F16K 5/04

(54) **A valve**

(30) Priority: 21.03.1995 US 407766
(71) Applicant: M & FC HOLDING COMPANY, INC., Wilmington, DE 19801 (US)
(72) Inventor: Stone, Jon T., Sulphur Springs, Texas 75482 (US)
(74) Representative: Treves, Barry William

(57) **Abstract**

There is presented a valve (50) comprising a body (52) having a conduit (54) therethrough and a bore (56) therein intersecting the conduit (54). The valve (50) further comprises a plug (60) for disposition in the body (52). The plug (60) includes stem (62), handle (64), gate (66) and base (70) portions. The gate portion (66) is provided with a hole (68) therethrough and is rotatably movable between a position wherein the hole (68) is in alignment with the conduit (54) and a position wherein the hole (68) is at least in part removed from alignment with the conduit (54). The valve base portion (70) is provided with leaf springs (72) extending therefrom and having hook portions (74) on free ends thereof. In assembly of the valve (50) the hook portions (74) are deflected inwardly, when the plug (60) is inserted into the body (52) by a body shelf portion (90) extending inwardly of the bore (56). The hook portions (74) are adapted to spring outwardly upon passage of the hook portions (74) over the shelf portion (90), the hook portions (74) being thereby captured under the shelf portion (90), such that the plug (60) is prevented from substantial axial movement in the body (52).

## Description

This invention relates to a valve and is directed more particularly to a substantially all plastic plug valve for use in gas lines.

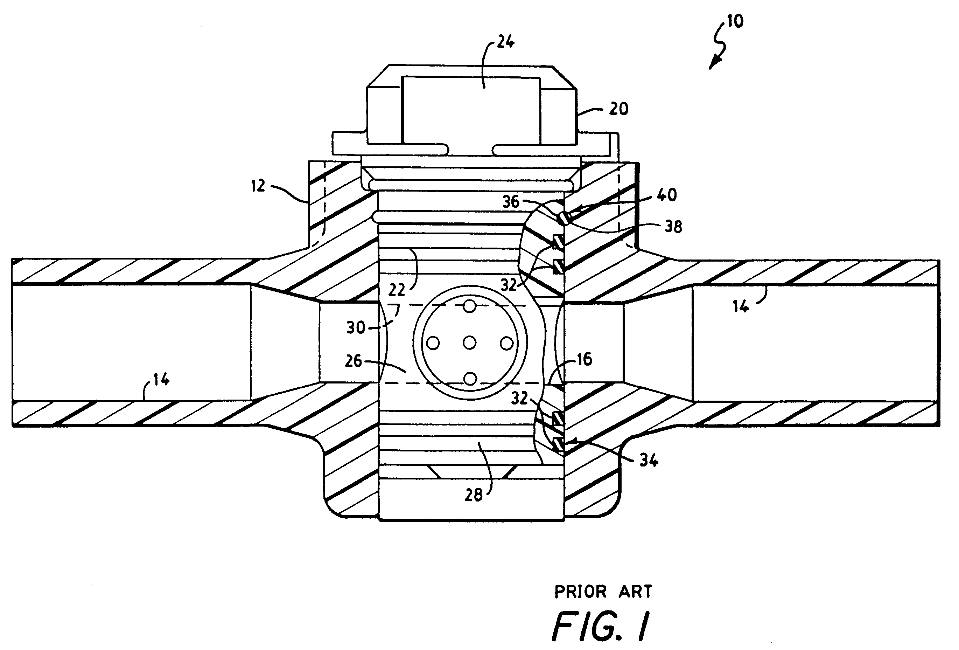

Referring to Figure 1, it is known to provide a valve 10 having a body 12 with a conduit 14 therethrough, and having a bore 16 therein transverse to the conduit 14 and intersecting the conduit 14. The known valve 10 is provided with a plug 20 having a stem portion 22, a handle portion 24, a gate portion 26, and a base portion 28. The gate portion 26 is adapted for selective rotary movement between a position (shown in Figure 1) wherein a hole 30 therethrough is in alignment with the conduit 14, and a position wherein the hole 30 is at least in part removed from alignment with the conduit 14. The stem and base portions 22, 28 are provided with grooves 32 machined therein for receiving sealing O-rings 34.

To prevent the valve plug 20 from moving, during underground service, axially upwardly, as viewed in Figure 1, in the body 12, a groove 36 is machined in the plug stem portion 22 and an opposing groove 38 is machined in the valve body 12. During assembly of the valve and after assembly of the plug 20 into the body 12, a retainer wire 40, typically of acetal material, is placed in the grooves 36, 38 through an external drilled hole. After assembly, the retainer wire 40 resides in the opposed grooves 36, 38, as shown in Figure 1. The insertion of the retainer wire 40 into the grooves 36, 38 must be done by hand, requiring time and a degree of skill and accuracy.

Accordingly, there is a need in valves of the general type above described for an interlock means integral with the plug and/or body for causing the two members to be locked together during assembly substantially automatically without need of manual dexterity or accuracy. There is a further need for such an interlock means providing a positive interlock, such that the plug cannot be urged upwardly in the valve body by underground pressures or other external means or forces.

Therefore, an object of the invention is to provide a valve having means integral with the body and plug components for locking the plug and the body together without the need for manual addition of further parts during assembly.

A further object of the invention is to provide such a valve wherein the locking means is a positive interlock means virtually assuring no substantial axial movement of the plug in the valve body.

With the above and other objects in view, as will hereinafter appear, a feature of the present invention is the provision of a valve comprising a body having a conduit therethrough, and a bore therein transverse to the conduit and intersecting the conduit. The valve further comprises a plug for disposition in the bore, the plug having a stem portion, a handle portion connected to the stem portion for turning the stem portion, and a gate portion connected to the stem portion, the gate portion having a hole widthwise therethrough. The gate is adapted for selective rotary movement between a position wherein the hole is in alignment with the conduit, and a position wherein the hole is at least in part removed from alignment with the conduit. The plug further includes a base portion having leaf springs extending therefrom, the leaf springs having hook portions on free ends thereof. A shelf portion of the body extends inwardly of the bore. The hook portions are configured so as to deflect radially inwardly upon contact with the shelf portion during assembly of the valve and are adapted to spring outwardly upon passage of the hook portions over the shelf portion, the hook portions being thereby captured under the shelf portion. The plug is thereby prevented from substantial axial movement in the body.

The above and other features of the invention, including various novel details of construction and combinations of parts, will now be more particularly described with reference to the accompanying drawings and pointed out in the claims. It will be understood that the particular device embodying the invention is shown by way of illustration only and not as a limitation of the invention. The principles and features of this invention may be employed in various and numerous embodiments without departing from the scope of the invention.

Reference is made to the accompanying drawings in which is shown an illustrative embodiment of the invention.
In the drawings:
- Figure 1: is a partly sectional and partly elevational view of a prior art valve;
- Figure 2: is a sectional view of a body portion of one form, of a valve illustrative of an embodiment of the invention;
- Figure 3: is an elevational view of an illustrative plug portion of the valve suitable for use with the body portion of Figure 2;
- Figure 4: is a sectional view of the plug of Figure 3;
- Figure 5: is a bottom view of the plug of Figure 3;
- Figure 6: is a partly sectional and partly elevational view of one form of valve illustrative of an embodiment of the invention; and
- Figure 7: is a top plan view of the valve of Figure 6.

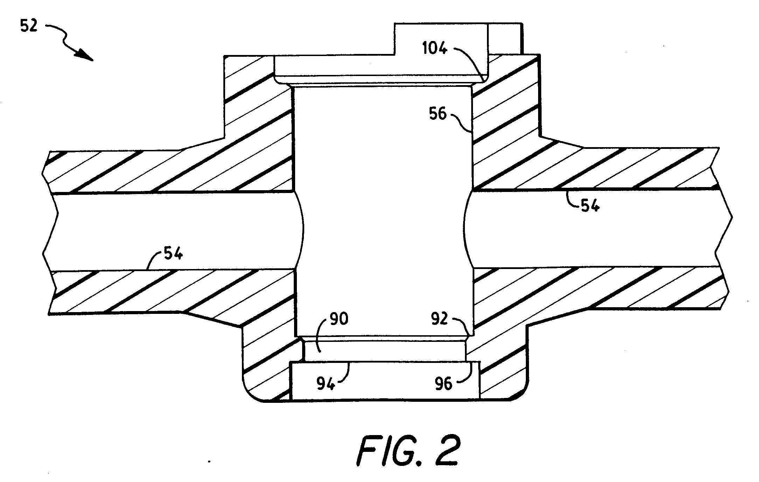

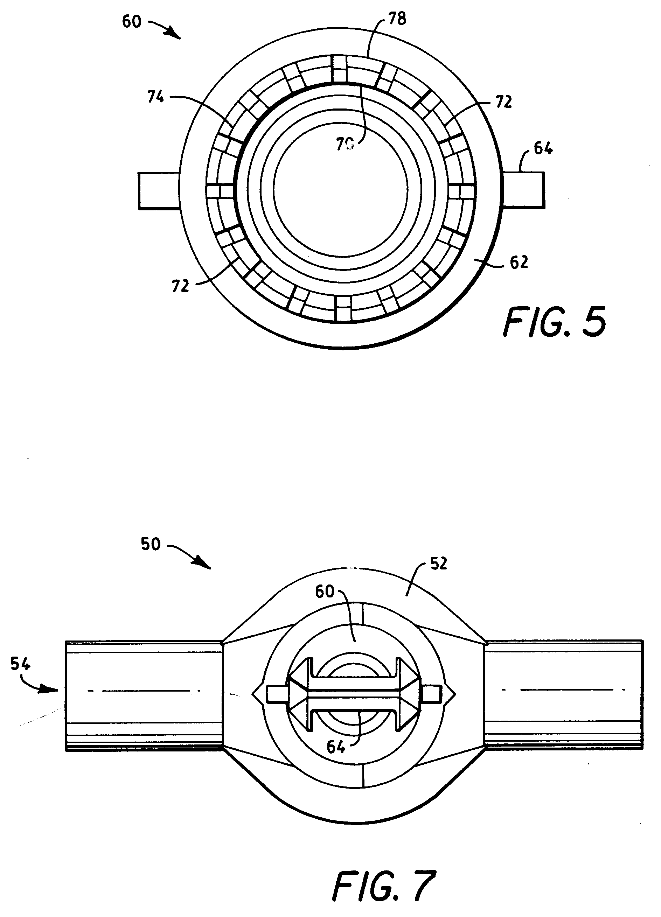

Referring to Figures 6 and 7, it will be seen that an illustrative valve 50 includes a body 52. Referring to Figure 2, it will be seen that the body 52 is provided with a conduit 54 therethrough and a bore 56 therein, the bore 56 being transverse to the conduit 54 and intersecting the conduit 54. The body 52 preferably is of polyethylene and is moulded with finish machining performed in the bore 56 and on the ends.

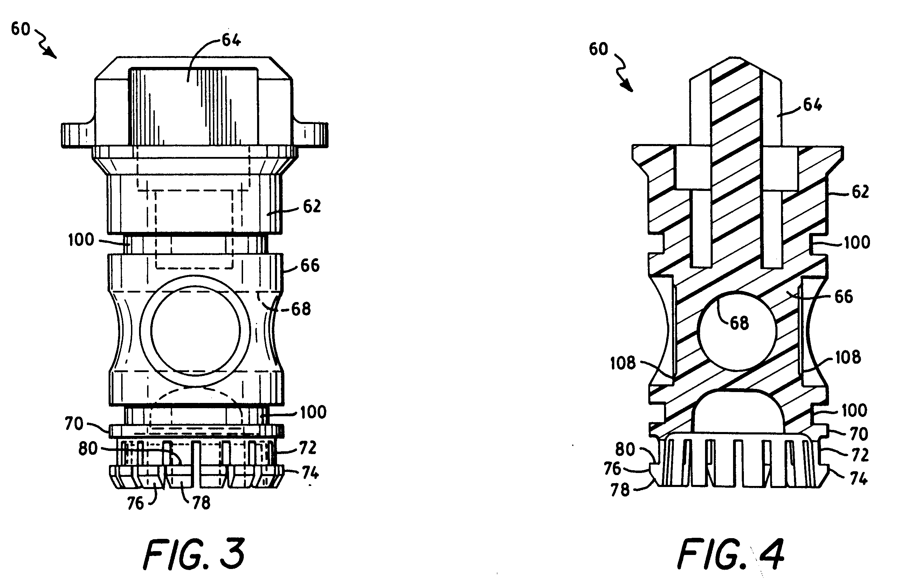

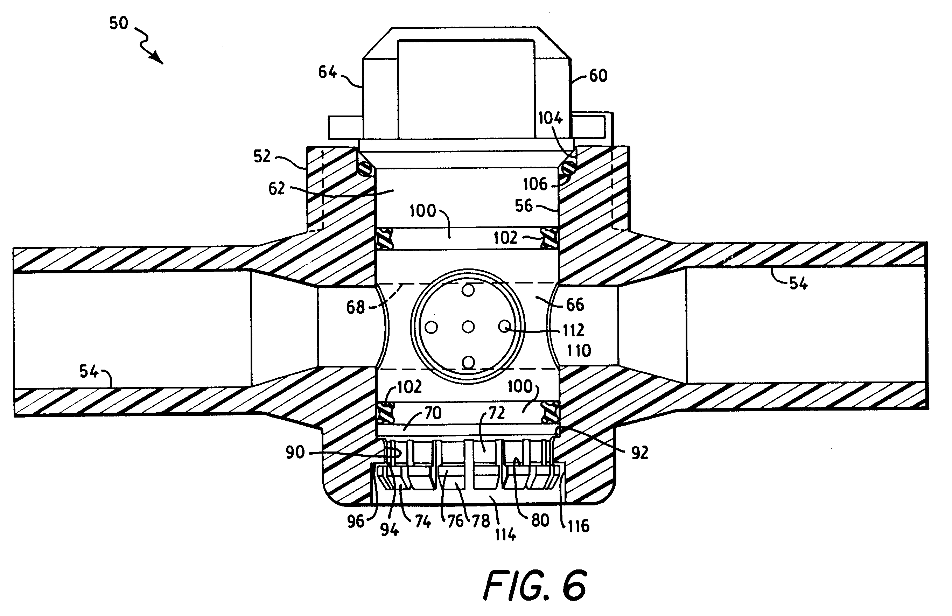

The valve 50 further includes a plug 60 (Figures 3-5), preferably of acetal material and moulded as a unitary member. The plug 60 includes a stem portion 62 and a handle portion 64 connected to the stem portion 62 for effecting turning of the stem portion 62 in the bore 56 by turning of the handle 64, which remains outside of the body 52. The plug 60 further includes a gate portion 66 which is turnable with the stem portion 62. The gate portion 66 is provided with a hole 68 (Figure 4) extending widthwise therethrough. The gate portion 66 is adapted for selective rotary movement between a position, shown in Figure 6, wherein the plug hole 68 is in alignment with the body conduit 54, and a position wherein the hole 68 is at least in part removed from alignment with the conduit 54.

The plug 60 still further includes a base portion 70 having elongated leaf springs 72 extending axially outwardly (downwardly as viewed in Figures 3-6). Each of the leaf springs 72 is provided at its free end with a hook portion 74 including a radially outwardly-extending projection 76 having an outboard cam surface 78 (Figure 4) at the lower end of the projection 76, as viewed in the drawings, and a lock surface 80 at the upper end of the projection.

Returning to Figures 2 and 6, it will be seen that the body 52 has an integral part thereof, in the bore 56, an inwardly-directed shelf 90 having at an upper extremity thereof a chamfered inboard edge 92 and at a lower extremity thereof a relatively sharp inboard edge 94 formed in part by an undersurface 96 of the shelf 90.

In assembly of the valve 50, the plug 60 is inserted into the body bore 56. Upon engagement of the hook portion cam surfaces 78 with the body shelf edge 92, the leaf springs 72 flex radially inwardly and the leaf spring projections 76 ride over the body shelf 90. When the projection 76 clears the shelf 90, the leaf springs 72 snap radially outwardly such that the hook portion lock surfaces 80 underlie the shelf undersurface 96, capturing the plug 60 in the body bore 56. Thereafter, the plug 60 is securely held so as to be unable to move axially in the body 52 though the plug 60 is readily moveable rotatively in the body 52.

In moulding the valve plug 60, there is moulded into the plug 60 between the stem portion 62 and the gate portion 66, and between the gate portion 66 and the base portion 70, respectively, an annular groove 100 (Figures 3, 4 and 6) in which is disposed a quad-type sealing ring 102 (Figure 6) of elastomeric material. The sealing rings 102 serve as a sealing means between the plug 60 and the body 52. The valve body 52 preferably is machined with a further annular recess 104 (Figures 2 and 6) in which is disposed a weather seal ring 106 (Figure 6) of elastomeric material.

The gate portion 66 of the valve plug 60 is provided with concavities 108 in which are disposed seats 110 of elastomeric material which are adapted to seal off the conduit 54 on both the upstream and downstream sides of the plug 60, as is known in the prior art (Figure 1). The seats 110 preferably are provided with orifices 112 (Figure 6) which permit gas on the upstream side of the conduit 54 to pass therethrough and into a concavity 108 to pressure energise the seat 110.

A dirt seal 114 (Figure 6) which preferably is a polyethylene cap, may be engaged in a bottom cavity 116 of the body 52, to protect the bore 56 from entry of dirt, and the like.

There is thus provided a valve having therein, as an integral part thereof, means for locking the plug into the bore of the body, which means operate automatically in assembly of the valve to interlock the plug and body components such that the plug is prevented from undergoing substantial axial movement in the valve body.

It is to be understood that the present invention is by no means limited to the particular construction herein disclosed and/or shown in the drawings, but also comprises any modifications or equivalents within the scope of the claims.

## Claims

1. A valve (50) comprising: a body (52) having a conduit (54) therethrough and a bore (56) therein transverse to said conduit (54) and intersecting said conduit (54); and
a plug (60) for disposition in said bore (56), said plug (60) having a stem portion (62),
a handle portion (64) connected to said stem portion (62) for turning said stem portion (62),
a gate portion (66) connected to said stem portion (62), said gate portion (66) having a hole (68) widthwise therethrough, said gate portion (66) being adapted for selective rotary movement between a position wherein said hole (68) is in alignment with said conduit (54) and a position wherein said hole (68) is at least in part removed from alignment with said conduit (54) characterised in that the plug (60) comprises
a base portion (70) having leaf springs (72) extending therefrom, said leaf springs (72) having hook portions (74) on free ends thereof,
and that the body (52) comprises
a shelf portion (90) extending inwardly of said bore (56),
said hook portions (74) being configured so as to deflect radially inwardly upon contact with said shelf portion (90) during assembly of said valve (50) and being adapted to spring outwardly upon passage of said hook portions (74) over said shelf portion (90), said hook portions (74) thereby being captured under said shelf portion (90) such that said plug (60) is prevented from substantial axial movement in said body (52) but is free to rotate.

2. The valve in accordance with Claim 1 characterised in that said body (52) is a moulded and finish machined unitary member.

3. The valve in accordance with Claim 2 characterised in that said moulded body (52) is of polyethylene.

4. The valve in accordance with any one of the preceding claims characterised in that said plug (60) is a moulded unitary member.

5. The valve in accordance with Claim 4 characterised in that said moulded plug (60) is of acetal material.

6. The valve in accordance with any one of the preceding claims characterised in that said plug (60) includes a first annular groove (100) between said stem portion (62) and said gate portion (66) and a second annular groove (100) between said gate portion (66) and said base portion (70) and a sealing ring (102) disposed in each of said grooves (100).

7. The valve in accordance with Claim 6 characterised in that said annular grooves (100) are moulded grooves.

8. The valve in accordance with any one of the preceding claims characterised in that said leaf spring hook portions (74) each includes a radially outwardly extending projection (76) having an outboard cam surface (78) at a first end thereof and a lock surface (80) at a second end thereof, and said shelf portion (90) has at an upper extremity thereof a chamfered inboard edge (92) and at a lower extremity thereof a relatively sharp inboard edge (94) formed in part by an undersurface (96) of said shelf portion (90).

9. The valve in accordance with Claim 8 characterised in that said hook portion lock surface (80) is engageable with said shelf undersurface (96) to effect said capture of said hook portions (74).
